# EUROPÄISCHE PATENTSCHRIFT

(11) **EP 0 392 054 B1**
(45) Veröffentlichungstag und Bekanntmachung des Hinweises auf die Patenterteilung: **17.03.1993**
(21) Anmeldenummer: 89106612.8
(22) Anmeldetag: 13.04.1989
(51) Int. Cl.: C10L 10/00

(54) **Verfahren und Einrichtung zum Vermindern des Schadstoffausstosses einer Verbrennungsanlage**
Process and apparatus for reducing the harmful emissions by an incineration plant
Procédé et dispositif pour diminuer l'émission des produits nocifs d'une installation d'incinération

(43) Veröffentlichungstag der Anmeldung: 17.10.1990
(73) Patentinhaber: SIEMENS AKTIENGESELLSCHAFT, 80333 München (DE)
(72) Erfinder: Meininger, Siegfred, D-8520 Erlangen (DE); Bege, Dietmar, D-8520 Erlangen (DE); Reichard, Alfred, D-8520 Erlangen (DE)

(56) Entgegenhaltungen:
- DE-A- 3 329 771
- FR-A- 766 252
- GB-A- 2 056 656
- US-A- 1 894 682

## Beschreibung

Die Erfindung betrifft ein Verfahren zum Verhindern des Ausstoßes Schwermetall emittierender Flugstäube aus einer eine Brennkammer aufweisenden Verbrennungsanlage, wobei der Brennkammer zu verbrenndes Gut, insbesondere Sondermüll, der Silikate enthält, zugeführt wird und von der Brennkammer Schlacke und Rauchgas abgegeben werden.

Die Erfindung betrifft auch eine Einrichtung zum Verhindern des Ausstoßes Schwermetall emittierender Flugstäube aus einer eine Brennkammer aufweisenden Verbrennungsanlage, wobei die Brennkammer Zuführvorrichtungen für zu verbrennendes Gut, eine Austragsöffnung für Schlacke und einen Auslaßstutzen für Rauchgas aufweist.

Aus der GB-A 2 056 656 ist ein Verfahren zum Reinigen von Reaktionsprodukten eines Verbrennungsvorganges bekannt. Dabei wird der Ausstoß von Schwefel-, Chlor- oder Fluorverbindungen aus einer Verbrennungsanlage verhindert, indem als Additive Metalloxide, Metallhydroxide, Calziumcarbonat, Magnesiumcarbonat oder Dolomit eingesetzt werden.

Sind in dem zu verbrennenden Gut sowohl Silikate als auch Schwermetalle enthalten, dann werden die Schwermetalle während des Verbrennungsprozesses in eine Silikatmatrix eingebunden. Nach dem Verbrennungsprozeß befinden sich die Schwermetalle in der Silikat enthaltenden Schlacke. Im Rauchgas und auch im Flugstaub befinden sich dann keine Schwermetalle mehr.

Abfallstoffe, die als Sondermüll bezeichnet werden, enthalten einen besonders hohen Anteil Schwermetalle, meist in der Form von Schwermetalloxiden. Außerdem ist der Silikatanteil bei Sondermüll nur ungefähr halb so groß wie bei anderen Abfallstoffen. Das führt dazu, daß nicht alle vorhandenen Schwermetalloxide von den vorhandenen Silikaten eingebunden werden können. Die verbleibenden Schwermetalle gelangen daher in das Rauchgas und in die Flugstäube.

Einige Schwermetalle, die einen niedrigen Siedepunkt haben, verdampfen in der Brennkammer und kondensieren im Abkühlungsteil der Verbrennungsanlage. Sie gelangen auf diesem Weg in die abgegebenen Flugstäube. Bei der bisher üblichen Sondermüllverbrennung sind daher niedrig siedende Schwermetalle, beispielsweise Zinn, Zink oder Blei, in der Schlacke kaum vorhanden, während die Flugstäube große Mengen dieser Metalle aufweisen und diese emittieren. Es ist daher bisher erforderlich, bei der Verbrennung von Sondermüll die Schwermetall enthaltenden Flugstäube zu beseitigen.

Ein Zurückführen von Flugstaub in den Verbrennungsprozeß löst das Problem nicht, da die Schwermetalle erneut verdampfen würden. Nach der Kondensation würden sie erneut mit den Flugstäuben abgegeben.

Bisher ist es üblich, die Flugstäube aus Verbrennungsanlagen, in denen Sondermüll verbrannt wird, zu separieren, zu sammeln und einem besonderen Endlager zuzuführen. Dabei wird in Erwägung gezogen, die Flugstäube in Glasblöcken einzuschmelzen.

Die bisher übliche sichere Beseitigung von Schwermetalle enthaltenden Flugstäuben ist aufwendig und teuer.

Der Erfindung liegt daher die Aufgabe zugrunde, ein Verfahren und eine Einrichtung zu entwickeln, die geeignet sind, den Schadstoffausstoß einer Verbrennungsanlage zu vermindern, indem das Entstehen Schwermetall emittierender Flugstäube auch bei der Sondermüllverbrennung verhindert wird.

Die Aufgabe ein Verfahren anzugeben, wird gemäß der Erfindung dadurch gelöst, daß in die Brennkammer außer dem zu verbrennenden Gut zusätzlich mindestens ein Silikat und/oder mindestens eine Borverbindung als Einbindematrix eingebracht werden.

Dadurch wird eine Silikatmenge oder eine Menge einer adäquaten Matrix, z.B.Borate bereitgestellt, die ausreicht, um alle Schwermetallverbindungen in der Brennkammer zu binden. Durch eine entsprechende Dosierung der Silikate oder einer anderen adäquaten Einbindematrix gelingt es, selbst bei sehr hohem Schwermetallanteil im Sondermüll das Rauchgas und damit den Flugstaub frei von Schwermetallen zu halten. Alle Schwermetalle werden in eine Silikatmatrix oder in einer anderen Matrix eingebunden, die die Brennkammer mit der Schlacke verläßt.

Damit wird der Vorteil erzielt, daß der Flugstaub einer weiteren Behandlung nicht mehr bedarf.

Das Einbringen weiterer Silikate in die Brennkammer erfolgt beispielsweise dadurch, daß in die Brennkammer Silikatstaub eingeblasen wird. Der Staub kann beispielsweise aus Sand, aus Kieselgur oder aus einem Gemisch von Sand und Kieselgur bestehen. Der Silikatstaub kann zusammen mit der notwendigen Verbrennungsluft in die Brennkammer gelangen. Es ist aber auch möglich, den Staub getrennt von der Verbrennungsluft zuzuführen.

In der Brennkammer wird der Silikatstaub aufgeschmolzen. Dazu ist Wärmeenergie erforderlich, die über eine Zeitspanne einwirkt. In dem aufgeschmolzenen Silikatstaub werden Schwermetalle eingebunden. Die Silikate mit den Schwermetallen bilden dann einen Teil der Schlacke.

Nach einem anderen Beispiel wird in die Brennkammer mindestens eine wäßrige Silikatlösung eingespeist. Damit wird bei gleichem vorteilhaftem Ergebnis, nämlich daß alle Schwermetalle in der Schlacke gebunden werden, zusätzlich der Vorteil erzielt, daß ein energetisch unwirtschaftliches Aufschmelzen des Silikats nicht erforderlich ist. Darüber hinaus wird der Vorteil erzielt, daß flüssige Silikate schnell in der Brennkammer homogen zu verteilen sind. Sie kommen daher schnell mit allen vorhandenen Schwermetallen und Schwermetalloxiden in Kontakt. Folglich werden schnell und zuverlässig alle Schwermetalle und Schwermetalloxide in eine Silikatmatrix eingebunden und mit der Schlacke abgegeben.

Beispielsweise werden Silikatlösungen flüssigen Abfallstoffen beigegeben und mit diesen in die Brennkammer eingespeist. Häufig weist nämlich eine Brennkammer außer einer Eintragsvorrichtung für festen Müll auch eine Eintragsvorrichtung für flüssige Abfallstoffe, wie Altöl, Lösungsmittel oder Abwasser, auf. Die Einspeisung von Silikatlösungen kann über diese Eintragsvorrichtung erfolgen. Dann ist ein separater Einspeiseanschluß nicht erforderlich. Es ist aber auch eine separate Einspeisung von Silikatlösungen denkbar.

Als Silikatlösungen werden beispielsweise Natriumsilikat Na₂SiO₃, das auch Wasserglas genannt wird, oder Kaliumsilikat K₂SiO₃ oder eine Mischung von beiden in die Brennkammer eingespeist. Natriumsilikat und Kaliumsilikat sind kostengünstig erhältlich.

Bei der Verwendung von Silikatllösungen erfolgt im Verbrennungsprozeß eine feine fast molekulare Verteilung dieser Stoffe. Dadurch erfolgt eine weitgehend vollständige Einbindung der Schwermetalle in die Silikate.

Bei der Verwendung von Natriumsilikat oder Kaliumsilikat wirkt sich vorteilhaft aus, daß die Affinität des Natriums und Kaliums zum Chlor größer ist als deren Affinität zum Silikat. Falls eine Lösung mit Chlorionen vorhanden ist, was fast immer zutrifft, da Abfallstoffe meist NaCl enthalten, entstehen Chlorsalze des Natriums und des Kaliums, während die verbleibenden Silikate Schwermetallionen aufnehmen. Auf diese Weise wird die Entfernung von Schwermetallen aus den Abfallstoffen beschleunigt. Aus Natriumsilikat bzw. Kaliumsilikat entstehen Schwermetallsilikate, indem prinzipiell Natriumatome bzw. Kaliumatome gegen Schwermetallatome ausgetauscht werden.

Damit möglichst die gesamte Schwermetallmenge in eine Silikatmatrix eingebunden wird, ist eine ausreichend große Silikatmenge einzuspeisen. Ein Silikatüberschuß ist dabei unschädlich.

Außer Silikat wird in die Brennkammer als Matrix beispielsweise auch mindestens eine Borverbindung eingebracht. Solche Borverbindungen dienen dazu, schwer lösliche Pigmente, die beispielsweise aus Farben oder Kunststoffen stammen, wie z.B. Titandioxid TiO₂ einzubinden. Beispielsweise wird mindestens eine staubförmige Borverbindung in die Brennkammer eingeblasen oder auf andere Weise eingebracht. Nach einem anderen Beispiel wird mindestens eine wäßrige Lösung einer Borverbindung eingespeist.

Auch jede andere geeignete Einbindematrix kann statt Silikat in der genannten Weise staubförmig oder in der Form einer wäßrigen Lösung in die Brennkammer eingebracht werden. Selbst das gleichzeitige Einspeisen einer staubförmigen Matrix und einer Matrix in wäßriger Lösung ist möglich. Es können gleichzeitig auch verschiedene als Einbindematrix geeignete Stoffe wie z.B. Silikate und Borverbindungen eingespeist werden, selbst falls einige Stoffe staubförmig und andere in Lösung vorliegen.

Die Aufgabe, eine geeignete Einrichtung zum Verhindern des Ausstoßes Schwermetall emittierender Flugstäube anzugeben, wird gemäß der Erfindung dadurch gelöst, daß die Brennkammer mindestens eine Einspeiseleitung für mindestens ein Silikat und/oder mindestens eine Borverbindung als Einbindematrix aufweist.

Diese zusätzliche Eintragsvorrichtung ist beispielsweise als Eintragsstutzen ausgebildet, mit dem ein Gebläse zum Einblasen von Silikatstaub verbunden ist. Derselbe Stutzen kann gleichzeitig als Zuführstutzen für Verbrennungsluft dienen. Dann wird der Silikatstaub zusammen mit der Verbrennungsluft in die Brennkammer eingeblasen. Auch eine staubförmige Borverbindung kann bei Bedarf durch denselben Stutzen eingespeist werden. Es ist aber auch möglich, daß getrennte Eintragstutzen für Verbrennungsluft und für Silikatstaub vorhanden sind. Auch für eine staubförmige Borverbindung kann ein separater Eintragsstutzen vorgesehen sein.

Sie kann aber auch der Verbrennungsluft oder dem Silikatstaub beigemischt werden.

Mit derartigen Eintragsstutzen wird der Vorteil erzielt, daß in die Brennkammer stets soviel Silikatstaub einzubringen ist, wie für eine vollständige Einbindung von Schwermetallen in eine Matrix erforderlich ist.

Nach einem anderen Beispiel weist die Brennkammer einen Eintragsstutzen für flüssige Silikatlösung auf. Eine geeignete flüssige Silikatlösung ist beispielsweise Natriumsilikat Na₂SiO₃ (Wasserglas) oder Kaliumsilikat K₂SiO₃.

Falls die Brennkammer bereits eine Zuführvorrichtung für flüssige Abfallstoffe, wie Altöl, Lösungsmittel und/oder Abwasser aufweist, ist beispielsweise diese Zuführvorrichtung mit einer Zuleitung für flüssige Silikatlösung verbunden. Die flüssige Silikatlösung wird also zusammen mit den flüssigen Abfallstoffen der Brennkammer zugeführt. Der flüssigen Silikatlösung oder den flüssigen Abfallstoffen kann bei Bedarf auch mindestens eine flüssige Lösung einer Borverbindung zugemischt werden.

Durch die Einspeisung einer flüssigen Silikatlösung wird, wie durch die Einspeisung von Silikatstaub, der Vorteil erzielt, daß in der Brennkammer stets soviel Silikat vorhanden ist, um alle Schwermetalle einzubinden. Staubförmige oder flüssige Borverbindungen erleichtern die Einbindung von Pigmenten, wie beispielsweise von Titandioxid TiO₂.

Auch jede andere geeignete staubförmige oder flüssige Einbindematrix kann statt Silikat mit einer genannten Einrichtung in die Brennkammer eingebracht werden.

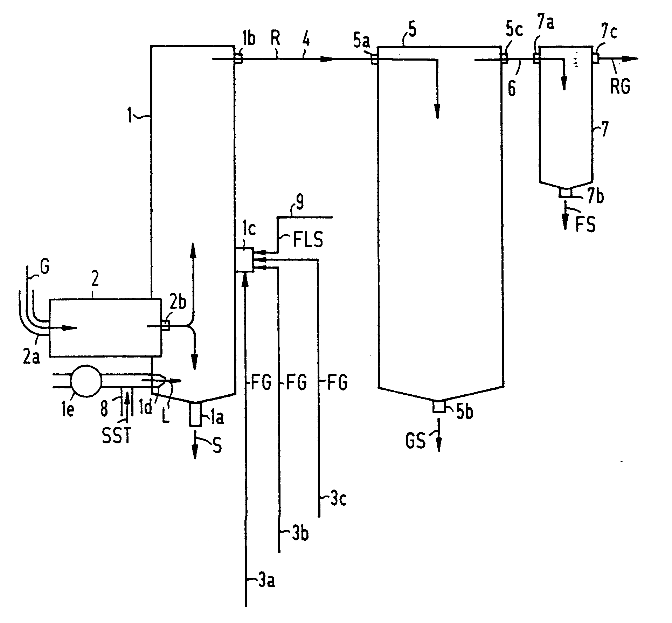

Mit dem Verfahren und mit der Einrichtung nach der Erfindung wird der Vorteil erzielt, daß alle Schwermetalle, die mit dem zu verbrennenden Gut in die Brennkammer gelangen, dort in eine Silikatmatrix oder eine andere Matrix eingebunden werden. Diese gelangt mit der Schlacke aus der Brennkammer heraus. Rauchgas und Flugstaub sind dann weitgehend frei von Schwermetallen, wodurch auch eine Verminderung des Schadstoffausstoßes erfolgt. Die Zeichnung zeigt eine Verbrennungsanlage, die mit einer Einrichtung zum Vermindern des Schadstoffausstoßes mit dem Flugstaub ausgestattet ist.

Der wesentliche Teil einer Verbrennungsanlage ist die Brennkammer 1. Mit der Brennkammer 1 ist zum Einbringen von zu verbrennendem Gut G ein Drehrohr 2 verbunden, das einen Eintragstutzen 2a für das Gut G und einen Austragsstutzen 2b aufweist, der in der Brennkammer 1 mündet. Das zu verbrennende Gut G ist in der Regel Müll, beispielsweise Sondermüll, der einen hohen Schwermetallanteil aufweist. Die Brennkammer 1 weist eine Austragsöffnung 1a für während dem Brennprozeß entstehende Schlacke S auf. Diese Austragsöffnung 1a befindet sich am unteren Ende der Brennkammer 1. Außerdem ist an der Brennkammer 1 am oberen Ende ein Auslaßstutzen 1b für Rauchgas R angeordnet. Darüber hinaus ist an der Brennkammer 1 ein Eintragsstutzen 1c für flüssiges Gut FG angeordnet, das dem Verbrennungsprozeß zuzuführen ist. Der Eintragsstutzen 1c ist dazu mit Zuleitungen 3a, 3b, 3c für Altöl, Lösungsmittel und auch für Abwasser verbunden. Das Abwasservolumen ist so bemessen, daß der Wasseranteil in der Brennkammer 1 sofort verdampft. Am unteren Ende der Brennkammer 1 ist außerdem eine Einspeisedüse 1d für Verbrennungsluft L angeordnet. Der Einspeisedüse 1d ist ein Gebläse 1e vorgeschaltet. Die aus der Austragsöffnung 1a an der Brennkammer 1 ausgetragene Schlacke S wird abtransportiert. Der Auslaßstutzen 1b für Rauchgas R steht über eine Rauchgasleitung 4 mit einem Abhitzekessel 5 an dessen Einlaßstutzen 5a in Verbindung. Im Abhitzekessel 5 kühlt sich das Rauchgas R ab. Dabei wird grober Staub GS, sogenannte Kesselasche, abgeschieden. Zum Abführen dieses groben Staubes GS ist am unteren Ende des Abhitzekessels 5 ein Austragsstutzen 5b angeordnet. Mit einem Auslaßstutzen 5c für abgekühltes, von grobem Staub GS befreites Rauchgas am oberen Ende des Abhitzekessels 5 ist über eine Verbindungsleitung 6 ein Einlaßstutzen 7a eines Elektrofilters 7 verbunden. Im Elektrofilter 7 wird auch der feine Staub, der sogenannte Flugstaub FS, aus dem Rauchgas abgetrennt. Das Elektrofilter 7 weist daher einen Austragsstutzen 7b für den feinen Staub FS und einen Ablaßstutzen 7c für das gereinigte Rauchgas RG auf.

Falls mit dem zu verbrennenden Gut G, FG sowohl Silikate als auch Schwermetalle in die Brennkammer 1 eingebracht werden, werden die Schwermetalle dort in eine Silikatmatrix eingebunden, die als Teil der Schlacke S durch die Austragsöffnung 1a als fester, leicht zu handhabender Stoff abgegeben wird. Falls das Verhältnis von Silikaten zu Schwermetallen im zu verbrennenden Gut G, FG ausreichend groß ist, werden alle Schwermetalle in eine Silikatmatrix eingebunden. Das Rauchgas R, das die Brennkammer 1 am Auslaßstutzen 1b verläßt, ist dann frei von Schwermetallen.

Falls das zu verbrennende Gut G, FG Sondermüll ist, ist der Schwermetallanteil relativ zum Silikatanteil sehr groß. Dann reichen die vorhandenen Silikate zum Einbinden aller vorhandenen Schwermetalle in eine Silikatmatrix nicht aus. Das führt dazu, daß ein Teil der Schwermetalle mit dem Rauchgas R die Brennkammer 1 verläßt. Die Schwermetalle werden dann erst mit dem Flugstaub FS vom Elektrofilter 7 abgeschieden. Dieser Schwermetall enthaltende Flugstaub FS, der wegen seines geringen Gewichtes schwer handhabbar ist, müßte wegen des Schwermetallanteiles entsorgt werden.

Das Verfahren und die Einrichtung nach der Erfindung ist darauf gerichtet, Schwermetall enthaltende Flugstäube FS nicht entstehen zu lassen. Dazu ist zwischen dem Gebläse 1e und der Einspeisedüse 1d an der Brennkammer 1 eine Einspeiseleitung 8 für eine staubförmige Einbindematrix, z. B. für Silikatstaub SST, angeordnet. Falls der Schwermetallanteil im zu verbrennenden Gut G,FG relativ zum Silikatanteil zu groß ist, wird über die Einspeiseleitung 8 und die Einspeisedüse 1d eine staubförmige Einbindematrix, z. B. Silikatstaub SST, in die Brennkammer 1 zusammen mit der Verbrennungsluft L eingeblasen. Der Silikatstaub SST oder eine andere staubförmige Einbindematrix kann aber auch auf andere Weise in die Brennkammer 1 eingebracht werden. Zum Einspeisen einer flüssigen Einbindematrix FLS, beispielsweise von Natriumsilikat (Wasserglas), ist mit dem Eintragsstutzen 1c für flüssiges zu verbrennendes Gut FG eine Einspeiseleitung 9 verbunden. Durch diese Einspeiseleitung 9 und den Eintragsstutzen 1c können bei Bedarf flüssige Silikatlösungen FLS oder eine andere flüssige Einbindematrix in die Brennkammer 1 eingebracht werden. Der Eintragsstutzen 1c kann direkt in einen Brenner in der Brennkammer 1 einmünden. Zumindest ein Teil des flüssigen Gutes FS dient dann als Brennstoff.

Wird eine ausreichende Menge Silikatstaub SST oder flüssige Silikatlösung FLS in die Brennkammer 1 eingebracht, dann verändert sich dort das Verhältnis der Schwermetalle zu den Silikaten so, daß alle Schwermetalle in eine Silikatmatrix eingebunden und mit der Schlacke S aus der Brennkammer 1 entfernt werden. Folglich ist der Flugstaub FS, der am Elektrofilter 7 abgegeben wird, frei von Schwermetallen. Der Flugstaub FS bedarf keiner Sonderbehandlung mehr. Statt Silikat kann auch eine andere Einbindematrix in die Brennkammer 1 eingebracht werden. Dann werden Schwermetalle in diese Matrix eingebunden.

Falls 7000 kg Sondermüll pro Stunde verbrannt werden sollen, ist bei einem im Sondermüll üblichen Schwermetallanteil das Einspeisen von 100 kg/h bis 200 kg/h Silikat erforderlich.

Zum Einbinden von Pigmenten wie TiO₂ können staubförmige oder flüssige Borverbindungen über die Einspeisedüse 1d, über den Eintragsstutzen 1c oder auch auf andere Weise in die Brennkammer 1 eingebracht werden.

## Patentansprüche

1. Verfahren zum Verhindern des Ausstoßes Schwermetall emittierender Flugstäube (FS) aus einer eine Brennkammer (1) aufweisenden Verbrennungsanlage, wobei der Brennkammer (1) zu verbrennendes Gut (G, FG), insbesondere Sondermüll, der Silikate enthält, zugeführt wird und von der Brennkammer (1) Schlacke (S) und Rauchgas (R) abgegeben werden,
**dadurch gekennzeichnet,** daß in die Brennkammer (1) das zu verbrennende Gut (G, FG) eingebracht und zusätzlich mindestens ein staubförmiges Silikat (SST) und/oder mindestens eine staubförmige Borverbindung als Einbindematrix eingeblasen werden.

2. Verfahren nach Anspruch 1,
**dadurch gekennzeichnet,** daß in die Brennkammer (1) Sand und/oder Kieselgur eingeblasen wird.

3. Verfahren zum Verhindern des Ausstoßes Schwermetall emittierender Flugstäube (FS) aus einer eine Brennkammer (1) aufweisenden Verbrennungsanlage, wobei der Brennkammer (1) zu verbrennendes Gut (G, FG), insbesondere Sondermüll, der Silikate enthält, zugeführt wird und von der Brennkammer (1) Schlacke (S) und Rauchgas (R) abgegeben werden,
**dadurch gekennzeichnet,** daß in die Brennkammer das zu verbrennende Gut (G, FG) eingebracht wird und zusätzlich mindestens eine wäßrige Silikatlösung (FLS) und/oder mindestens eine wäßrige Lösung einer Borverbindung als Einbindematrix eingespeist werden.

4. Verfahren nach Anspruch 3,
**dadurch gekennzeichnet,** daß in die Brennkammer (1) mindestens eine flüssige Einbindematrix, insbesondere mindestens eine wäßrige Silikatlösung (FLS) und/oder mindestens eine wäßrige Lösung einer Borverbindung vermischt mit flüssigem zu verbrennendem Gut (FG), insbesondere mit flüssigen Abfallstoffen, eingespeist wird.

5. Verfahren nach einem der Ansprüche 3 oder 4,
**dadurch gekennzeichnet,** daß in die Brennkammer (1) Natriumsilikat Na₂SiO₃ (Wasserglas) eingespeist wird.

6. Verfahren nach einem der Ansprüche 3 oder 4,
**dadurch gekennzeichnet,** daß in die Brennkammer (1) Kaliumsilikat K₂SiO₃ eingespeist wird.

7. Einrichtung zum Verhindern des Ausstoßes Schwermetall emittierender Flugstäube (FS) aus einer eine Brennkammer (1) aufweisenden Verbrennungsanlage, wobei die Brennkammer (1) Zuführvorrichtungen (1c, 2b) für zu verbrennendes Gut (G, FG), eine Austragsöffnung (1a) für Schlacke (S) und einen Auslaßstutzen (1b) für Rauchgas (R) aufweist,
**dadurch gekennzeichnet,** daß die Brennkammer (1) eine Einspeisedüse (1d) für Silikatstaub (SST) und/oder Verbrennungsluft (L) und/oder mindestens eine staubförmige Borverbindung aufweist.

8. Einrichtung zum Verhindern des Ausstoßes Schwermetall emittierender Flugstäube (FS) aus einer eine Brennkammer (1) aufweisenden Verbrennungsanlage, wobei die Brennkammer (1) Zuführvorrichtungen (1c, 2b) für zu verbrennendes Gut (G, FG), eine Austragsöffnung (1a) für Schlacke (S) und einen Auslaßstutzen (1b) für Rauchgas (R) aufweist,
**dadurch gekennzeichnet,** daß die Brennkammer (1) einen Eintragsstutzen (1c) für flüssige Silikatlösung (FLS) und/oder flüssiges zu verbrennendes Gut (FG) und/oder mindestens eine flüssige Lösung einer Borverbindung aufweist.

## Claims

1. Process for preventing the emission of heavy-metal-emitting flue dusts (FS), from an incineration plant having a combustion chamber (1), wherein material (G, FG) to be incinerated, in particular special waste which contains silicates, is fed to the combustion chamber (1), and slag (S) and flue gas (R) are emitted from the combustion chamber (1), characterised in that the material (G, FG) to be incinerated is introduced into the combustion chamber (1) and in addition at least one powdered silicate (SST) and/or at least one powdered boron compound are injected as a binding matrix.

2. Process according to claim 1, characterised in that sand and/or kieselguhr is injected into the combustion chamber (1).

3. Process for preventing the emission of heavy-metal-emitting flue dusts (FS), from an incineration plant having a combustion chamber (1), wherein material (G, FG) to be incinerated, in particular special waste which contains silicates, is fed to the combustion chamber (1), and slag (S) and flue gas (R) are emitted from the combustion chamber (1), characterised in that the material (G, FG) to be incinerated is introduced into the combustion chamber and in addition at least one aqueous silicate solution (FLS) and/or at least one aqueous solution of a boron compound is fed in as a binding matrix.

4. Process according to claim 3, characterised in that at least one liquid binding matrix, in particular at least one aqueous silicate solution (FLS) and/or at least one aqueous solution of a boron compound mixed with liquid material (FG) to be incinerated, in particular with liquid waste materials, is fed into the combustion chamber (1).

5. Process according to one of claims 3 or 4, characterised in that sodium silicate Na₂SiO₃ (waterglass) is fed into the combustion chamber (1).

6. Process according to one of claims 3 or 4, characterised in that potassium silicate K₂SiO₃ is fed into the combustion chamber (1).

7. Device for preventing the emission of heavy-metal-emitting flue dusts (FS), from an incineration plant having a combustion chamber (1), wherein the combustion chamber (1) has feed devices (1c, 2b) for material (G, FG) to be incinerated, a discharge aperture (1a) for slag (S) and an outlet connection (1b) for flue gas (R), characterised in that the combustion chamber (1) has a feed nozzle (1d) for silicate dust (SST) and/or incineration air (L) and/or at least one powdered boron compound.

8. Device for preventing the emission of heavy-metal-emitting flue dusts (FS), from an incineration plant having a combustion chamber (1), wherein the combustion chamber (1) has feed devices (1c, 2b) for material (G, FG) to be incinerated, a discharge aperture (1a) for slag (S) and an outlet connection (1b) for flue gas (R), characterised in that the combustion chamber (1) has a feed connection (1c) for liquid silicate solution (FLS) and/or liquid material (FG) to be incinerated and/or at least one liquid solution of a boron compound.

## Revendications

1. Procédé pour diminuer la sortie de cendres volantes (FS) émettant des métaux lourds d'une installation d'incinération comportant une chambre de combustion (1), du produit (G, FG) à incinérer, notamment des ordures particulières qui contiennent des silicates, étant amené à la chambre de combustion (1) et des scories (S) et des gaz de fumée (R) étant évacués de la chambre de combustion (1), caractérisé en ce qu'il consiste à introduire le produit (G, FG) à incinérer dans la chambre de combustion (1) et à insuffler en outre au moins un silicate (SST) pulvérulent et/ou au moins un composé boré pulvérulent en tant que matrice d'incorporation.

2. Procédé suivant la revendication 1, caractérisé en ce qu'il consiste à insuffler du sable et/ou de la terre de diatomées dans la chambre de combustion (1).

3. Procédé pour empêcher la sortie de cendres volantes (FS) émettant des métaux lourds d'une installation d'incinération comportant une chambre de combustion (1), du produit (G, FG) à incinérer, notamment des ordures particulières qui contiennent des silicates, étant amené à la chambre de combustion (1) et des scories (S) et des gaz de fumée (R) étant évacués de la chambre de combustion (1), caractérisé en ce qu'il consiste à introduire le produit (G, FG) à incinérer dans la chambre de combustion et, en outre, à l'alimenter par au moins une solution aqueuse de silicate (FLS) et/ou par au moins une solution aqueuse d'un composé boré à titre de matrice d'incorporation.

4. Procédé suivant la revendication 3, caractérisé en ce qu'il consiste à alimenter la chambre de combustion (1) par au moins une matrice d'incorporation liquide, notamment par au moins une solution aqueuse de silicate (FLS) et/ou par au moins une solution aqueuse d'un composé boré mélangé à du produit (FG) à incinérer liquide, notamment à des déchets liquides.

5. Procédé suivant l'une des revendications 3 ou 4, caractérisé en ce qu'il consiste à alimenter la chambre de combustion (1) en silicate de sodium Na₂SiO₃ (verre soluble).

6. Procédé suivant l'une des revendications 3 ou 4, caractérisé en ce qu'il consiste à alimenter la chambre de combustion (1) en silicate de potassium K₂SiO₃.

7. Dispositif pour empêcher la sortie de cendres volantes (FS) émettant des métaux lourds d'une installation d'incinération comportant une chambre de combustion (1), la chambre de combustion (1) comportant des dispositifs d'amenée (1c, 2b) du produit (G, FG) à incinérer, une ouverture de déchargement (1a) des scories (S) et un conduit de sortie (1b) du gaz du fumée (R), caractérisé en ce que la chambre de combustion (1) comporte une buse d'alimentation (1d) en poussière de silicate (SST) et/ou en air de combustion (L) et/ou en au moins un composé boré pulvérulent.

8. Dispositif pour empêcher la sortie de cendres volantes (FS) émettant des métaux lourds d'une installation d'incinération comportant une chambre de combustion (1), la chambre de combustion (1) comportant des dispositifs d'amenée (1c, 2b) du produit (G, FG) à incinérer, une ouverture de déchargement (1a) des scories (S) et un conduit de sortie (1b) du gaz du fumée (R), caractérisé en ce que la chambre de combustion (1) comporte un conduit d'entrée (1c) d'une solution liquide de silicate (FLS) et/ou de produit (FG) à incinérer liquide et/ou d'au moins une solution liquide d'un composé boré.
